# FASCICULE DE BREVET EUROPEEN

(11) **EP 0 735 836 B1**
(45) Date de publication et mention de la délivrance du brevet: **02.09.1998**
(21) Numéro de dépôt: 95902833.3
(22) Date de dépôt: 06.12.1994
(51) Int. Cl.: A47J 31/40

(54) **DISTRIBUTEUR AUTOMATIQUE DE MOUTURE**
AUTOMATISCHE DOSIERVORRICHTUNG FÜR MAHLGUT
AUTOMATIC GROUND GRAIN DISPENSER

(30) Priorité: 20.12.1993 FR 9315319
(43) Date de publication de la demande: 09.10.1996
(73) Titulaire: MOULINEX S.A., 75008 Paris (FR)
(72) Inventeur: LANDAIS, Francis Pierre Jacques, décédé (FR); MORIN, Gilles Gérard Albert Victor, F-61000 Alençon (FR)
(74) Mandataire: Busquets, Jean-Pierre
(86) Numéro de dépôt international: FR9401416
(87) Numéro de publication internationale: WO9517120

(56) Documents cités:
- EP-A- 0 331 271
- DE-U- 9 301 949
- FR-A- 1 431 228

## Description

La présente invention concerne un distributeur automatique de mouture destiné à être monté, notamment mais non exclusivement, sur une machine à café automatique, et du type comportant un réservoir comprenant une paroi latérale, destiné à contenir une quantité de mouture et positionné de manière amovible dans un siège de forme complémentaire réalisé dans la partie supérieure d'un boîtier, et au moins une palette rotative placée dans la partie inférieure du réservoir, entraînée en rotation par un groupe moteur logé dans le boîtier, et propre, en tournant, à transférer par une ouverture d'écoulement pratiquée dans le réservoir une quantité déterminée de mouture vers une sortie réalisée dans le siège du boîtier et communiquant avec ladite ouverture du réservoir.

Dans un distributeur de mouture de café connu de ce genre, tel que celui décrit dans le document DE-U-93 01 949, le réservoir positionné de manière amovible dans le siège du boîtier et destiné à contenir une quantité de mouture de café, ne présente pas de fond. Un tel distributeur à réservoir sans fond est utilisable avec différents types de moutures de café, c'est-à-dire des moutures de granulométries différentes, mais sans toutefois donner la possibilité à l'utilisateur de changer à son gré de type de mouture tant que le réservoir n'est pas vide, ce qui en fait un distributeur d'emploi particulièrement contraignant pour l'utilisateur lorsque celui-ci désire, le réservoir n'étant pas vide, changer de type de mouture.

Par le document EP-A-0 331 271, on connaît un distributeur automatique de mouture d'un produit pulvérulent, du type comportant un réservoir sans fond destiné à contenir une quantité de mouture et monté amovible sur une plate-forme d'un boîtier, ainsi qu'une vis de dosage communiquant avec le réservoir et permettant, par suite de l'ouverture d'une valve actionnée par un électro-aimant, l'écoulement d'une quantité déterminée de mouture dans une goulotte de sortie. Ce type de distributeur à réservoir sans fond ne permet également pas à l'utilisateur de pouvoir changer à volonté de type de mouture tant que le réservoir n'est pas vide, de sorte que ce distributeur est aussi d'un emploi contraignant pour l'utilisateur en cas de désir de changement de type de mouture.

L'invention a notamment pour but de pallier cet inconvénient et de réaliser un distributeur automatique de mouture qui permette à l'utilisateur de changer à volonté le type de mouture d'un même produit pulvérulent avant même que le réservoir ne soit vide, et ce d'une manière simple et efficace.

Selon l'invention, un distributeur automatique de mouture du type exposé ci-dessus est plus particulièrement caractérisé en ce que le réservoir comprenant un fond, ce réservoir est monté dans le siège du boîtier au moyen d'au moins deux organes rotatifs dissociables d'accouplement mutuel qui sont agencés respectivement dans le fond du réservoir et dans le fond du siège du boîtier, et qui sont couplés en rotation respectivement à la palette et au groupe moteur, ledit réservoir comprenant en outre des moyens adaptés, d'une part, à obturer l'ouverture du réservoir lors de l'arrêt du groupe moteur, et d'autre part, à libérer cette ouverture lors de la mise en marche du groupe moteur.

Grâce à cette réalisation, on comprend que l'utilisateur pourra à tout moment démonter le réservoir déjà en place et ne contenant pas le type de mouture désiré, et monter en lieu et place un autre réservoir identique qui, lui, contient le type de mouture souhaité. De plus, le montage et le démontage du réservoir sont particulièrement aisés, ce qui contribue à l'obtention d'un distributeur d'emploi commode pour l'utilisateur.

Les caractéristiques et avantages de l'invention ressortiront d'ailleurs de la description qui va suivre d'un mode particulier de réalisation pris à titre d'exemple non limitatif illustré aux dessins annexés dans lesquels :
- la figure 1 est une vue en coupe verticale d'un distributeur automatique de mouture selon l'invention, montrant un réservoir de mouture en position de montage ;
- la figure 2 est une vue en coupe selon la ligne II-II de la figure 1 ;
- la figure 3 est une vue en coupe selon la ligne III-III de la figure 1 ;
- la figure 4 est une vue identique à la figure 1, montrant le réservoir de mouture en position de démontage ; et
- la figure 5 est une vue identique à la figure 4, à plus petite échelle, illustrant trois réservoirs au choix contenant chacun un type donné de mouture.

Dans ce qui suit, on décrira le distributeur automatique de mouture conforme à l'invention dans le cadre d'une distribution de mouture de café, étant entendu qu'un tel distributeur peut également être utilisé pour dispenser une mouture de toute autre nature, par exemple de la farine, sans sortir pour cela du cadre de l'invention.

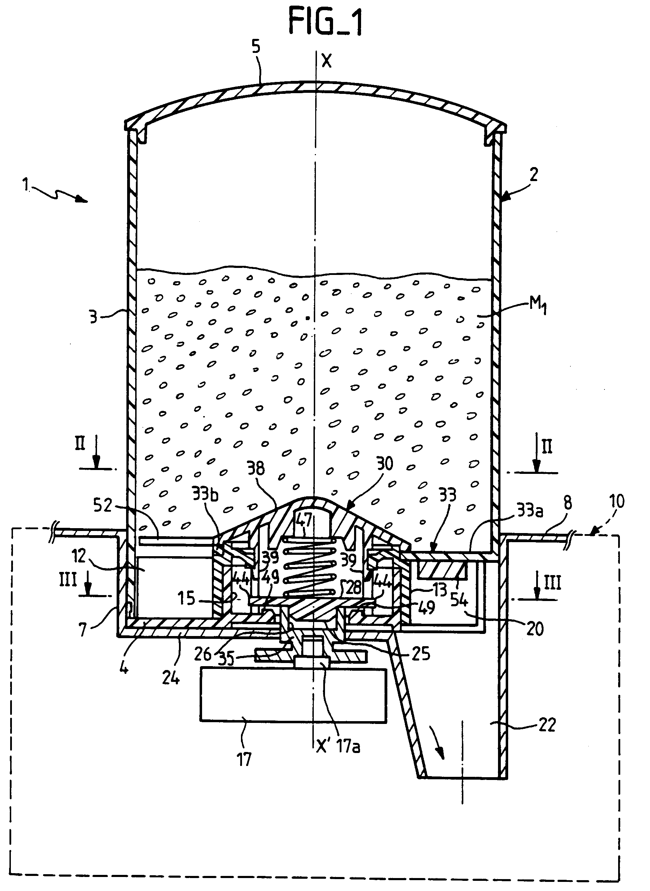

Dans l'exemple de réalisation illustré à la figure 1, le distributeur de mouture 1 comporte un réservoir 2 de forme générale cylindrique d'axe XX', présentant une paroi latérale 3, un fond amovible 4 et un couvercle amovible de fermeture 5, et contenant une quantité de mouture de café M₁ à granulométrie adaptée au café souhaité par l'utilisateur, telle que par exemple une mouture adaptée à un café du type "long".

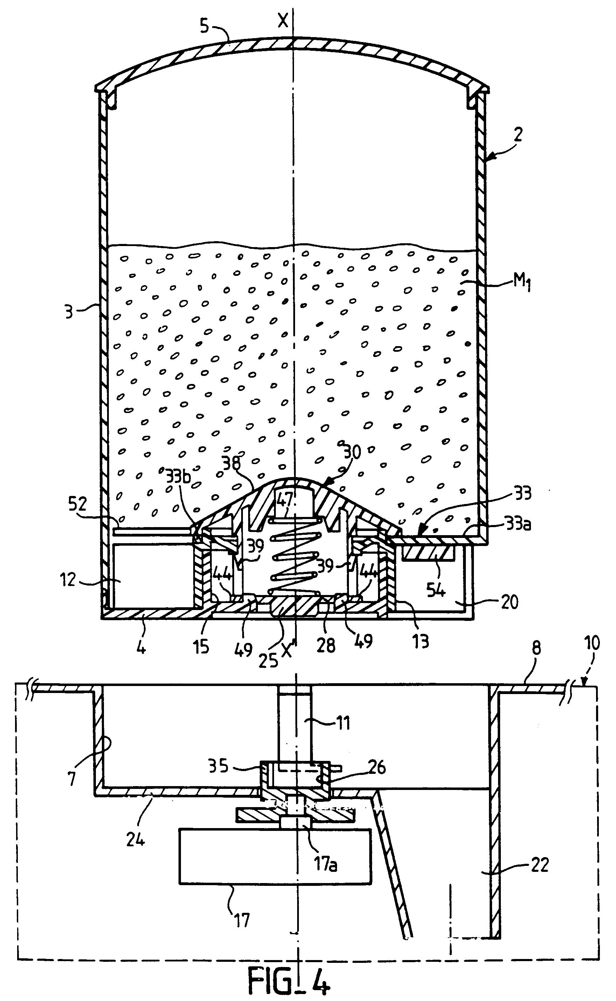

Le réservoir 2 est monté, dans sa partie basse, dans un siège annulaire de réception 7 réalisé dans la partie supérieure 8 d'un boîtier 10, représenté schématiquement en pointillés sur la figure 1, faisant partie intégrante d'une machine à café automatique (non représentée). A cet effet, le réservoir 2 est maintenu en place dans le siège 7 du boîtier 10 au moyen de tout système approprié de fixation réversible tel que par exemple un système à baïonnette illustré partiellement en 11 sur la figure 4.

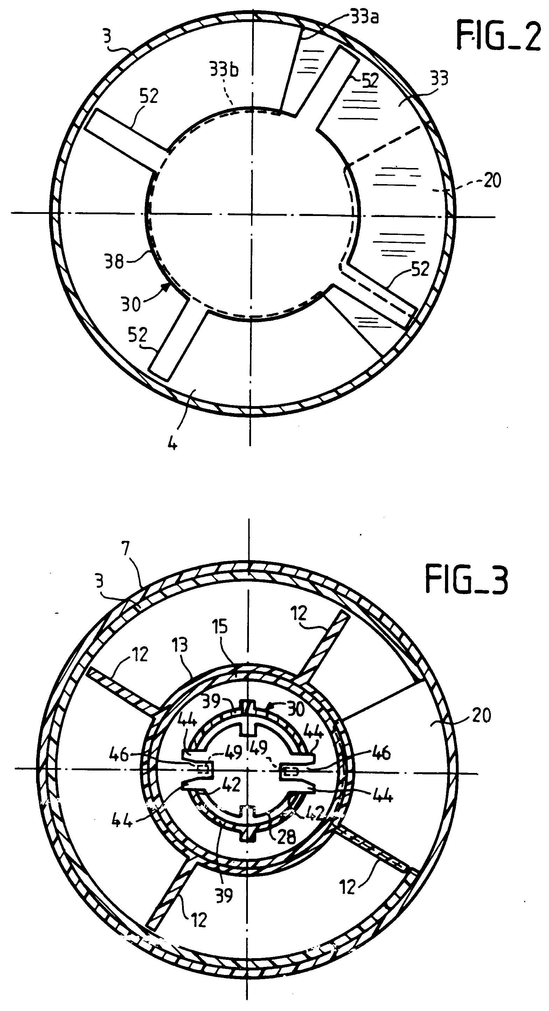

Dans cet exemple, le réservoir 2 comporte dans son fond 4 une pluralité de palettes radiales rotatives 12, en l'occurrence au nombre de quatre comme on le voit sur la figure 3, qui sont régulièrement réparties le long d'un corps cylindrique creux 13 monté rotatif coaxialement autour d'un berceau annulaire 15 axé sur l'axe XX' et formé à partir du fond 4 du réservoir, qui s'étendent sensiblement jusqu'à la périphérie de la paroi latérale 3 du réservoir 2, et qui sont destinées à être entraînées, via un mécanisme rotatif de couplage que l'on décrira par la suite, par un groupe moto-réducteur 17 logé dans le boîtier 10 en vue de transférer, par une ouverture d'écoulement 20 pratiquée latéralement et dans le fond du réservoir 2 d'une manière qui sera précisée plus loin, une dose déterminée de mouture de café M₁ vers une goulotte d'évacuation 22 orientée vers le bas, formée latéralement dans le fond 24 du siège 7 et communiquant directement avec l'ouverture d'écoulement 20.

Selon l'invention, le réservoir 2 est monté de manière amovible dans le siège 7 du boîtier 10 au moyen de deux organes rotatifs dissociables d'accouplement mutuel 25,26 qui sont couplés en rotation respectivement aux palettes 12 et au groupe moteur 17, le réservoir 2 comportant en outre des moyens adaptés, d'une part, à obturer son ouverture 20 lors de l'arrêt du groupe moteur 17, et d'autre part, à libérer cette même ouverture 20 lors de la mise en marche du groupe moteur 17.

Dans l'exemple de réalisation illustré à la figure 1, l'un des deux organes d'accouplement mutuel, à savoir celui désigné en 25, est constitué par un téton formé sur la face inférieure d'une plaquette ronde 28 agencée coaxialement dans le berceau annulaire 15 et montée rotative dans une pièce de couplage 30 qui est rendue solidaire du corps 13 de support des palettes 12 au moyen d'éléments de fixation appropriés, et qui est montée elle-même rotative, autour de l'axe XX', sur une pièce de support 33 solidaire du réservoir 2. L'autre organe d'accouplement 26 est, quant à lui, constitué par un évidement qui est ménagé dans une pièce rotative formant entraîneur 35 traversant axialement le fond 24 du siège 7 et le fond 4 du réservoir 2 et solidaire de l'arbre de sortie 17a du groupe moteur 17, et dans lequel est engagé intimement, par exemple par un encliquetage réversible, le téton 25 de la plaquette 28.

Dans cet exemple, la pièce de couplage 30 comporte une paroi supérieure 38 conformée en un dôme destiné à faciliter la descente de la mouture M₁ vers le fond 4 du réservoir 2, ainsi que deux parois latérales semi-cylindriques 39, visibles en section droite à la figure 3, orientées en vis-à-vis et séparées sur toute leur hauteur par deux fentes 42 dans chacune desquelles est disposée, en appui contre les bords extrêmes respectifs des parois latérales 39, une paire de doigts d'entraînement 44 s'étendant radialement à partir de la plaquette 28 et formant entre eux une encoche 46 s'étendant sur toute la hauteur de la plaquette 28, voir figure 3.

Comme on le voit sur la figure 1, un ressort spiralé 47 est interposé, sur l'axe XX', entre la paroi supérieure 38 de la pièce de couplage 30 et la face supérieure de la plaquette 28 ; le fond 4 du réservoir 2 est en outre pourvu de deux ergots identiques 49 dirigés vers le haut et destinés, d'une part, à venir en engagement dans les deux encoches 46 de la plaquette 28 sous l'action de la force de rappel du ressort 47 lors du retrait du réservoir 2, verrouillant ainsi la plaquette comme illustré à la figure 4, et d'autre part, à venir en dégagement des deux encoches 46 de la plaquette 28 à l'encontre de la force de rappel du ressort 47 lors de la mise en place du réservoir 2, déverrouillant ainsi la plaquette comme illustré à la figure 1.

En regard des figures 1 et 2, la pièce de support 33 destinée à maintenir en place la pièce de couplage 30 est constituée par une aile plane qui est formée à partir de la paroi latérale 3 du réservoir 2, sensiblement à la même hauteur que les palettes 12, en s'étendant parallèlement au fond 4 du réservoir (figure 1), et qui présente un tronçon 33a en forme de secteur circulaire (figure 2) se prolongeant par un tronçon annulaire 33b représenté en pointillés sur la figure 2 ; ce tronçon annulaire 33b entretoise la partie supérieure du corps 13 de support des palettes et la paroi supérieure 38 de la pièce de couplage 30, comme visible à la figure 1.

Afin de faire descendre la mouture M₁ présente sur le tronçon 33a de l'aile plane 33 dans le fond du réservoir 2, la paroi supérieure 38 de la pièce de couplage 30 est pourvue à cet effet d'une pluralité de palettes radiales rotatives 52, en l'occurrence au nombre de quatre comme on le voit sur la figure 2, réparties régulièrement et s'étendant sensiblement jusqu'à la périphérie de la paroi latérale 3 du réservoir.

En regard des figures 1, 2 et 3, l'ouverture d'écoulement 20 est constituée présentement par une découpe pratiquée à la fois dans la paroi latérale 3 du réservoir, entre l'aile plane 33 et le fond 4 du réservoir, et dans le fond 4 du réservoir suivant un petit secteur circulaire.

Dans l'ouverture d'écoulement 20, figure 1, est disposée une languette souple 54 fixée sur la face inférieure du tronçon 33a de l'aile plane 33 par tout moyen approprié de fixation, et destinée à favoriser par balayage et guidage un écoulement régulier et continu de la mouture M₁ dans la goulotte d'évacuation 22. En effet, la mouture susceptible de se déposer sur la tranche des palettes 12 est balayée par la languette souple 54 au fur et à mesure de la rotation desdites palettes.

Dans l'exemple de réalisation illustré à la figure 1, les palettes 12 placées dans le fond du réservoir 2 ont sensiblement la même hauteur que l'ouverture d'écoulement 20 et sont indexées de telle sorte que deux d'entre elles, après arrêt du groupe moteur 17, viennent border l'ouverture 20, comme on le voit à la figure 3, empêchant ainsi l'écoulement de la mouture M₁ hors du réservoir. Ces deux palettes 12 assurent donc l'obturation de l'ouverture 20 lors de l'arrêt du groupe moteur 17, ainsi que la libération de cette ouverture 20 par suite de leur entraînement par le groupe moteur 17 une fois mis en marche.

De préférence, l'indexation des palettes 12 est réalisée par au moins un microrupteur (non représenté) subordonné au groupe moteur 17.

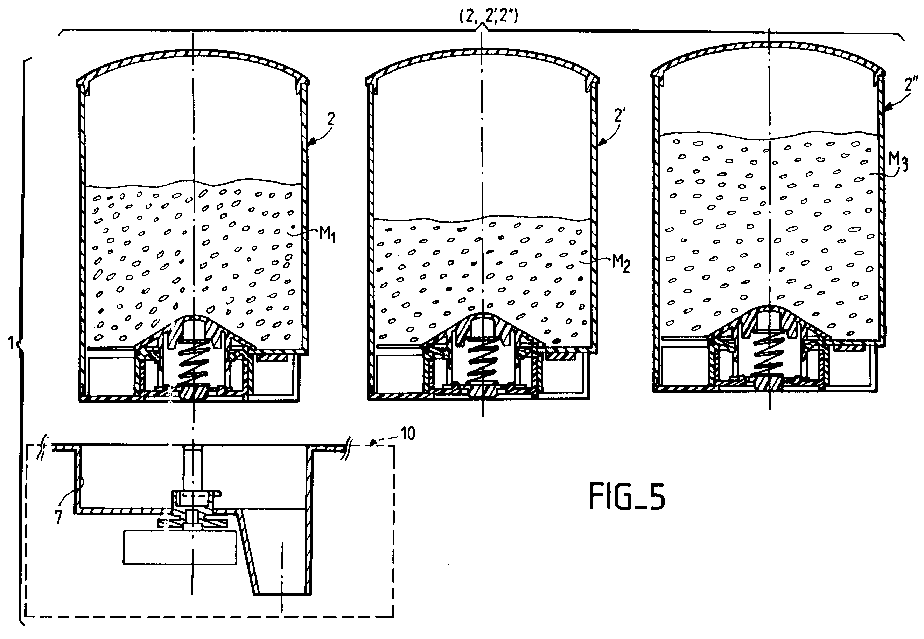

Sur la figure 5, on a représenté à titre d'exemple nullement limitatif une série de trois réservoirs identiques 2, 2' et 2'' tel que décrit précédemment à propos du réservoir 2, mais contenant chacun une mouture de café à granulométrie différente adaptée au café souhaité par l'utilisateur, et destinés à être montés dans le siège 7 du boîtier 10 au choix de l'utilisateur. Ainsi, par exemple, le réservoir 2 contient, comme on l'a vu en référence à la figure 1, la mouture M₁ adaptée à un café du type "long", le réservoir 2' contient une mouture M₂ adaptée à un café du type "espresso", et le réservoir 2'' contient une mouture M₃ adaptée à un café décaféiné.

En regard de la figure 1, dans laquelle le réservoir 2 contient la mouture M₁, le fonctionnement du distributeur de mouture de café 1 conforme à l'invention est le suivant.

La plaquette 28 entraînée en rotation par le groupe moteur 17 via l'entraîneur 35 entraîne elle-même en rotation, par ses doigts 44 (figure 3), la pièce de couplage 30 et les quatre palettes 52 qu'elle porte pour faire descendre la mouture M₁ présente sur l'aile plane 33, laquelle pièce de couplage 30 entraînant elle-même en rotation les quatre palettes 12 portées par le corps 13 solidaire de la pièce de couplage 30. Les quatre palettes 12 brassent la mouture de café M₁ et éjectent une dose déterminée de mouture à travers l'ouverture 20, la mouture M₁ s'écoulant alors dans la goulotte d'évacuation 22 d'une manière régulière et continue grâce à la languette 54.

Après distribution de la dose déterminée de mouture M₁, l'arrêt du groupe moteur 17 assure, d'une part, un positionnement des quatre palettes 12 tel que deux d'entre elles bordent l'ouverture 20 de façon à empêcher tout écoulement de la mouture M₁, et d'autre part, une mise en regard des deux encoches 46 de la plaquette 28 avec les deux ergots 49 du fond 4 du réservoir.

Le changement du réservoir 2 contenant la mouture M₁, par exemple par le réservoir 2' (figure 5) qui, lui, contient la mouture M₂ adaptée au café souhaité par l'utilisateur, à savoir un café du type "espresso" dans l'exemple choisi, s'effectue de la manière suivante.

L'utilisateur tourne légèrement le réservoir 2 et extrait ce dernier du siège 7 du boîtier 10 par dissociation des deux organes d'accouplement 25,26, les deux ergots 49 du fond 4 du réservoir venant alors en engagement dans les deux encoches 46 de la plaquette 28 qui est rappelée vers le fond 4 du réservoir sous l'action du ressort 47 comme illustré à la figure 4. L'utilisateur met ensuite en place le réservoir 2' contenant la mouture M₂ dans le siège 7 du boîtier 10 avec engagement intime du téton 25 dans l'évidement 26, les deux ergots 49 du fond 4 du réservoir 2' venant alors, par action du bord de l'évidement de l'entraîneur 35 sur la plaquette mobile 28, en dégagement des deux encoches 46 de la plaquette 28 sollicitée à l'encontre du ressort 47. De préférence, le réservoir 2 une fois extrait et contenant la mouture M₁ est, quant à lui, entreposé dans un réfrigérateur de manière à ce que la mouture garde tout son arôme.

## Revendications

1. Distributeur automatique de mouture comportant un réservoir (2) comprenant une paroi latérale (3), destiné à contenir une quantité de mouture (M₁) et positionné de manière amovible dans un siège (7) de forme complémentaire réalisé dans la partie supérieure (8) d'un boîtier (10), et au moins une palette rotative (12) placée dans la partie inférieure du réservoir (2), entraînée en rotation par un groupe moteur (17) logé dans le boîtier (10), et propre, en tournant, à transférer par une ouverture d'écoulement (20) pratiquée dans le réservoir une quantité déterminée de mouture vers une sortie (22) réalisée dans le siège du boîtier et communiquant avec ladite ouverture (20) du réservoir,
**caractérisé en ce que** le réservoir (2) comprenant un fond (4), ce réservoir (2) est monté dans le siège (7) du boîtier (10) au moyen d'au moins deux organes rotatifs dissociables d'accouplement mutuel (25,26) qui sont agencés respectivement dans le fond du réservoir (2) et dans le fond du siège (7) du boîtier (10), et qui sont couplés en rotation respectivement à la palette (12) et au groupe moteur (17), ledit réservoir (2) comprenant en outre des moyens adaptés, d'une part, à obturer l'ouverture (20) du réservoir lors de l'arrêt du groupe moteur (17), et d'autre part, à libérer cette ouverture (20) lors de la mise en marche du groupe moteur (17).

2. Distributeur automatique de mouture selon la revendication 1,
**caractérisé en ce que** les deux organes d'accouplement mutuel (25,26) sont constitués respectivement par un téton (25) formé sur la face inférieure d'une plaquette ronde rotative (28) montée mobile élastiquement, suivant l'axe (XX') du réservoir (2), dans une pièce de couplage (30) reliée à la palette et montée rotative autour de l'axe du réservoir sur une pièce de support (33) solidaire du réservoir (2), et par un évidement approprié (26) qui est ménagé dans une pièce rotative formant entraîneur (35) traversant axialement le fond (24) du siège (7) du boîtier et le fond (4) du réservoir (2) et solidaire de l'arbre de sortie du groupe moteur (17), et dans lequel est engagé intimement le téton (25), ladite plaquette (28) venant en position de rappel élastique contre le fond du réservoir (2) lors du retrait de celui-ci.

3. Distributeur automatique de mouture selon la revendication 2,
**caractérisé en ce que** la pièce de couplage (30) comporte une paroi supérieure circulaire (38) et deux parois latérales semi-cylindriques (39) orientées en vis-à-vis et séparées par deux fentes verticales (42) dans chacune desquelles est disposé, en appui contre les bords extrêmes respectifs desdites parois latérales, au moins un doigt d'entraînement (44) s'étendant radialement à partir de la plaquette (28), un ressort de rappel (47) étant interposé entre la paroi supérieure de la pièce de couplage (30) et la face supérieure de la plaquette (28).

4. Distributeur automatique de mouture selon la revendication 3,
**caractérisé en ce que** deux paires de doigts d'entraînement (44) sont disposées respectivement dans les deux fentes (42) de la pièce de couplage (30) et sont séparées chacune par une encoche (46) s'étendant sur toute la hauteur de la plaquette (28), et en ce que le fond (4) du réservoir (2) comporte deux ergots (49) dirigés vers le haut et destinés, d'une part, à venir en engagement dans les deux encoches (46) de la plaquette sous l'action de la force de rappel du ressort (47) lors du retrait du réservoir, verrouillant ainsi la plaquette (28), et d'autre part, à venir en dégagement des deux encoches (46) à l'encontre de la force de rappel du ressort (47) lors de la mise en place du réservoir, déverrouillant ainsi la plaquette (28).

5. Distributeur automatique de mouture selon la revendication 3 ou 4,
**caractérisé en ce que** la paroi supérieure (38) de la pièce de couplage (30) est conformée en un dôme de manière à faciliter la descente de la mouture (M₁) vers le fond du réservoir (2).

6. Distributeur automatique de mouture selon l'une des revendications 3 à 5,
**caractérisé en ce que** le réservoir (2) présentant une forme générale cylindrique, la palette (12) s'étend radialement, sensiblement jusqu'à la périphérie de la paroi latérale (3) du réservoir (2), le long d'un corps cylindrique creux (13) monté coaxialement autour d'un berceau annulaire (15) formé à partir du fond (4) du réservoir (2), coaxialement aux deux parois latérales (39) de la pièce de couplage (30) et à légère distance radiale de celles-ci, la bordure supérieure dudit corps (13) et les deux parois latérales de la pièce de couplage (30) comportant des moyens coopérants de fixation.

7. Distributeur automatique de mouture selon la revendication 6,
**caractérisé en ce que** le corps (13) est pourvu d'une pluralité de palettes radiales identiques (12) réparties régulièrement autour dudit corps, en ce que la pièce de support (33) est constituée par une aile plane qui est formée à partir de la paroi latérale (3) du réservoir (2), sensiblement à la même hauteur que les palettes (12), qui s'étend parallèlement au fond (4) du réservoir (2), et qui présente un tronçon en forme de secteur circulaire (33a) se prolongeant par un tronçon annulaire (33b) entretoisant la partie supérieure dudit corps (13) et la paroi supérieure de la pièce de couplage (30), et en ce que l'ouverture (20) d'écoulement de la mouture est constituée par une découpe pratiquée à la fois dans la face latérale (3) du réservoir (2), entre l'aile plane (33) et le fond (4) du réservoir, et dans le fond (4) du réservoir (2) suivant un petit secteur circulaire, lesdites palettes (12) étant indexées de telle sorte que deux d'entre elles, après arrêt du groupe moteur (17), bordent ladite ouverture (20) de manière à empêcher l'écoulement de la mouture hors du réservoir, ces deux palettes constituant les moyens destinés, d'une part, à obturer l'ouverture (20) du réservoir lors de l'arrêt du groupe moteur (17), et d'autre part, à libérer cette ouverture (20) lors de la mise en marche du groupe moteur (17).

8. Distributeur automatique de mouture selon la revendication 7,
**caractérisé en ce que** la paroi supérieure (38) de la pièce de couplage (30) se prolonge radialement, sensiblement jusqu'à la périphérie de la paroi latérale (3) du réservoir (2), par au moins une palette supplémentaire (52) destinée à faire descendre la mouture (M₁) présente sur le tronçon en forme de secteur circulaire (33a) de l'aile plane (33) dans le fond du réservoir (2).

9. Distributeur automatique de mouture selon la revendication 7 ou 8,
**caractérisé en ce que** le tronçon en forme de secteur circulaire (33a) de l'aile plane (33) porte sur sa face inférieure une lanquette souple (54) s'étendant dans l'ouverture d'écoulement (20) et faisant office de balai et de guide pour la mouture issue du réservoir (2).

10. Distributeur automatique de mouture selon l'une quelconque des revendications précédentes,
**caractérisé en ce que** le réservoir (2) fait partie d'une série de réservoirs identiques (2, 2', 2'') contenant chacun une mouture (M₁, M₂, M₃) de granulométrie différente.

## Claims

1. Automatic ground grain dispenser having a reservoir (2) comprising a lateral wall (3), designed to contain a quantity of ground grain (M₁) and removably positioned in a seat (7) of complementary shape produced in the top part (8) of a casing (10), and at least one rotating blade (12) positioned in the lower part of the reservoir (2), rotated by a motor unit (17) housed in the casing (10), and suitable, when it turns, for transferring through an outflow opening (20) formed in the reservoir a given quantity of ground grain to an outlet (22) produced in the seat of the casing and communicating with said opening (20) in the reservoir,
**characterised in that** the reservoir (2) comprising a bottom (4), this reservoir (2) is mounted in the seat (7) of the casing (10) by means of at least two separable rotating mutual coupling devices (25, 26) which are arranged respectively in the bottom of the reservoir (2) and in the bottom of the seat (7) of the casing (10), and which are coupled in rotation respectively to the blade (12) and to the motor unit (17), said reservoir (2) also comprising means adapted, on the one hand, to close off the opening (20) in the reservoir when the motor unit (17) is stopped, and on the other hand to free this opening (20) when the motor unit (17) is started up.

2. Automatic ground grain dispenser according to claim 1,
**characterised in that** the two mutual coupling devices (25, 26) consist respectively of a stud (25) formed on the bottom face of a rotating round plate (28) mounted, so as to move elastically, about the axis (XX') of the reservoir (2), in a coupling piece (30) connected to the blade and mounted so as to rotate about the axis of the reservoir on a support piece (33) fixed to the reservoir (2), and a suitable recess (26) which is formed in a rotating piece forming a driving device (35) passing axially through the bottom (24) of the seat (7) of the casing and the bottom (4) of the reservoir (2) and fixed to the output shaft of the motor unit (17), and in which the stud (25) is closely engaged, said plate (28) coming into the position of elastic return against the bottom of the reservoir (2) when the latter is removed.

3. Automatic ground grain dispenser according to claim 2,
**characterised in that** the coupling piece (30) has a circular top wall (38) and two semi-cylindrical lateral walls (39), oriented so as to face each other and separated by two vertical slots (42) in each of which there is disposed, bearing against the respective extreme edges of said lateral walls, at least one driving finger (44) extending radially from the plate (28), a return spring (47) being interposed between the top wall of the coupling piece (30) and the top face of the plate (28).

4. Automatic ground grain dispenser according to claim 3,
**characterised in that** two pairs of driving fingers (44) are disposed respectively in the two slots (42) in the coupling piece (30) and are each separated by a notch (46) extending over the whole height of the plate (28), and in that the bottom (4) of the reservoir (2) has two lugs (49) directed upwards and designed, on the one hand, to engage in the two notches (46) in the plate under the action of the return force of the spring (47) when the reservoir is withdrawn, thereby locking the plate (28), and on the other hand to be disengaged from the two notches (46) counter to the return force of the spring (47) when the reservoir is put in place, thereby unlocking the plate (28).

5. Automatic ground grain dispenser according to claim 3 or 4,
**characterised in that** the top wall (38) of the coupling piece (30) is in the shape of a dome, so as to facilitate the dropping of the ground grain (M₁) to the bottom of the reservoir (2).

6. Automatic ground grain dispenser according to one of claims 3 to 5,
**characterised in that** the reservoir (2) being of cylindrical general shape, the blade (12) extends radially, substantially as far as the periphery of the lateral wall (3) of the reservoir (2), along a hollow cylindrical body (13) mounted coaxially about an annular cradle (15) formed from the bottom (4) of the reservoir (2), coaxially with the two lateral walls (39) of the coupling piece (30) and at a slight radial distance from them, the top edge of said body (13) and the two lateral walls of the coupling piece (30) having cooperating fixing means.

7. Automatic ground grain dispenser according to claim 6,
**characterised in that** the body (13) is provided with a plurality of identical radial blades (12) distributed regularly about said body, in that the support piece (33) consists of a flat wing which is formed from the lateral wall (3) of the reservoir (2), substantially at the same height as the blades (12), which extends parallel to the bottom (4) of the reservoir (2), and which has a section in the shape of a circular sector (33a) extended by an annular section (33b) bracing the top part of said body (13) and the top wall of the coupling piece (30), and in that the outflow opening (20) for the ground grain consists of a cut-out formed both in the lateral face (3) of the reservoir (2), between the flat wing (33) and the bottom (4) of the reservoir, and in the bottom (4) of the reservoir (2) along a small circular sector, said blades (12) being indexed so that two of them, once the motor unit (17) has stopped, come to border on the opening (20), so as to prevent the ground grain from flow from the reservoir, these two blades constituting the means designed, on the one hand, to close off the opening (20) in the reservoir when the motor unit (17) is stopped, and on the other hand, to free this opening (20) when the motor unit (17) is started up.

8. Automatic ground grain dispenser according to claim 7,
**characterised in that** the top wall (38) of the coupling piece (30) is extended radially, substantially to the periphery of the lateral wall (3) of the reservoir (2), by at least one additional blade (52) designed to drop the ground grain (M₁) present on the section in the form of an angular sector (33a) of the flat wing (33) into the bottom of the reservoir (2).

9. Automatic ground grain dispenser according to claim 7 or 8,
**characterised in that** the section in the form of a circular sector (33a) of the flat wing (33) carries on its bottom face a flexible tab (54) extending into the outflow opening (20) and serving as a wiper and a guide for the ground grain coming from the reservoir (2).

10. Automatic ground grain dispenser according to any one of the preceding claims,
**characterised in that** the reservoir (2) forms part of a series of identical reservoirs (2, 2', 2'') each containing a ground grain (M₁, M₂, M₃) with a different particle size.

## Patentansprüche

1. Automatische Dosiervorrichtung für Mahlgut mit einem Behälter (2), der eine Seitenwand (3) aufweist und eine bestimmte Menge Mahlgut (M₁) enthält und abnehmbar in einem im oberen Bereich (8) eines Gehäuses (10) ausgebildeten Sitz (7) von komplementärer Form angeordnet ist, und mindestens einem im unteren Bereichs des Behälters (2) angeordneten drehbaren Flügel (12), der von einem im Gehäuse (10) angeordneten Motorblock (17) angetrieben wird und beim Drehen eine bestimmte Menge Mahlgut durch eine im Behälter ausgebildete Austrittsöffnung (20) zu einem im Sitz des Gehäuses ausgebildeten Auslaß (22) transportiert, der mit der Öffnung (20) des Behälters verbunden ist, **dadurch gekennzeichnet, daß** der Behälter einen Boden (4) aufweist und daß der Behälter (2) im Sitz (7) des Gehäuses (10) durch mindestens zwei drehbare, trennbare gegenseitige Kupplungselemente (25, 26) montiert ist, die jeweils im Boden des Behälters (2) und im Boden des Sitzes (7) des Gehäuses (10) angeordnet sind, und die drehbar jeweils an den Flügel (12) und an den Motorblock (17) gekuppelt sind, wobei der Behälter (2) außerdem Elemente aufweist, die einerseits die Öffnung (20) des Behälters beim Stillstand des Motors (17) verschließen und andererseits diese Öffnung (20) bei Inbetriebnahme des Motors (17) freigeben.

2. Automatische Dosiervorrichtung für Mahlgut nach Anspruch 1, **dadurch gekennzeichnet, daß** die beiden gegenseitigen Kupplungselemente (25, 26) je durch einen Zapfen (25), der auf der unteren Fläche einer drehbaren runden Scheibe (28) geformt ist, welche gemäß der Achse (XX') des Behälters (2) in einem mit dem Flügel verbundenen Kupplungsstück (30) elastisch beweglich montiert ist, das um die Achse des Behälters drehbar auf einem mit dem Behälter (2) fest verbundenen Stützelement (33) montiert ist, und eine entsprechende Aussparung (26) gebildet sind, die in einem drehbaren, einen Mitnehmer (35) bildenden Stück ausgebildet ist, der axial den Boden (24) des Sitzes (7) des Gehäuses und den Boden (4) des Behälters (2) durchsetzt und mit der Abtriebswelle des Motorblocks (17) fest verbunden ist, und in welche der Zapfen (25) dicht anliegend eingreift, wobei die Scheibe (28) beim Abnehmen des Behälters (2) in eine elastische Rückholstellung gegen den Boden des Behälters gebracht wird.

3. Automatische Dosiervorrichtung für Mahlgut nach Anspruch 2, **dadurch gekennzeichnet, daß** das Kupplungsstück (30) eine obere kreisförmige Wand (38) und zwei halbzylindrische Seitenwände (39) aufweist, die einander gegenüber angeordnet sind und durch zwei vertikale Spalte (42) voneinander getrennt sind, in welchen jeweils mindestens ein Mitnehmerfinger (44) angeordnet ist, der gegen den jeweiligen äußeren Rand der Seitenwände drückt und sich von der Scheibe (28) radial erstreckt, wobei zwischen der oberen Wand des Kupplungsstücks (30) und der oberen Fläche der Scheibe (28) eine Rückstellfeder (47) angeordnet ist.

4. Automatische Dosiervorrichtung für Mahlgut nach Anspruch 3, **dadurch gekennzeichnet, daß** zwei Mitnehmerfinger-Paare (44) jeweils in den beiden Spalten (42) des Kupplungsstücks (30) angeordnet sind und jeweils durch eine Aussparung (46) voneinander getrennt sind, die sich über die gesamte Höhe der Scheibe (28) erstreckt, und daß der Boden (4) des Behälters (2) zwei nach oben gerichtete Vorsprünge (49) aufweist, die einerseits beim Abnehmen des Behälters durch die Kraft der Rückstellfeder (47) in die beiden Aussparungen (46) eingreifen, wodurch die Scheibe (28) verriegelt wird, und andererseits beim Einsetzen des Behälters gegen die Kraft der Feder (47) die beiden Aussparungen (46) freigeben, wodurch die Scheibe (28) entriegelt wird.

5. Automatische Dosiervorrichtung für Mahlgut nach Anspruch 3 oder 4, **dadurch gekennzeichnet, daß** die obere Wand (38) des Kupplungsstücks (30) zu einem Dom ausgebildet ist, um das Herabgleiten des Mahlguts M₁ auf den Boden des Behälters (2) zu erleichtern.

6. Automatische Dosiervorrichtung für Mahlgut nach einem der Ansprüche 3 bis 5, **dadurch gekennzeichnet, daß** sich der Flügel (12) bei allgemein zylindrischer Form des Behälters (2) radial im wesentlichen bis zum Umfang der Seitenwand (3) des Behälters (2) erstreckt, entlang einem hohlen zylindrischen Körper (13), der koaxial um einen vom Boden (4) des Behälters (2) aus gebildeten ringförmigen Sattel (15) montiert ist, koaxial zu den beiden Seitenwänden (39) des Kupplungsstücks (30) und radial leicht von diesen beabstandet, wobei der obere Rand des Körpers (13) und die beiden Seitenwände des Kupplungsstücks (30) zusammenwirkende Befestigungselemente aufweisen.

7. Automatische Dosiervorrichtung für Mahlgut nach Anspruch 6, **dadurch gekennzeichnet, daß** der Körper (13) mit einer Mehrzahl von identischen radialen Flügeln (12) ausgestattet ist, die regelmäßig um den Körper herum verteilt sind, daß das Stützelement (33) durch einen flachen Flügel gebildet ist, der von der Seitenwand (3) des Behälters (2) aus im wesentlichen auf der gleichen Höhe wie die Flügel (12) ausgebildet ist, wobei er sich parallel zum Boden (4) des Behälters (2) erstreckt, und das Stützelement ein Teilstück (33a) in Form eines Kreissektors aufweist, das durch ein ringförmiges Teilstück (33b) verlängert wird, das den oberen Teil des Körpers (13) und die obere Wand des Kupplungsstücks (30) voneinander trennt, und daß die Auslaßöffnung (20) des Mahlguts durch einen sowohl in der seitlichen Fläche (3) des Behälters (2), zwischen dem flachen Flügel (33) und dem Boden (4) des Behälters, als auch im Boden (4) des Behälters (2) gemäß einem kleinen Kreissektor ausgebildeten Ausschnitt gebildet ist, wobei die Flügel (12) so ausgerichtet sind, daß zwei von ihnen nach Stillstand des Motorblocks (17) die Öffnung (20) begrenzen und dadurch den Austritt von Mahlgut aus dem Behälter verhindern, wobei diese beiden Flügel Elemente bilden, die einerseits die Öffnung (20) des Behälters bei Stillstand des Motors (17) verschließen und andererseits diese Öffnung bei Inbetriebnahme des Motors (17) freigeben.

8. Automatische Dosiervorrichtung für Mahlgut nach Anspruch 7, **dadurch gekennzeichnet, daß** die obere Wand (38) des Kupplungsstücks (30) im wesentlichen bis zum Umfang der Seitenwand (3) des Behälters (2) radial durch mindestens einen zusätzlichen Flügel (52) verlängert ist, der das auf dem Teilstück (33a) in Form eines Kreissektors des flachen Flügels (33) vorhandene Kaffeemehl auf den Boden des Behälters hinabgleiten läßt.

9. Automatische Dosiervorrichtung nach Anspruch 7 oder 8, **dadurch gekennzeichnet, daß** das Teilstück (33a) in Form eines Kreissektors des flachen Flügels (33) auf seiner unteren Fläche eine biegsame Zunge (54) trägt, die sich in die Austrittsöffnung (20) erstreckt und als Besen und Führung für das aus dem Behälter (2) austretende Mahlgut dient.

10. Automatische Dosiervorrichtung nach einem der vorangehenden Ansprüche, **dadurch gekennzeichnet, daß** der Behälter (2) zu einer Reihe von identischen Behältern (2, 2', 2'') gehört, die jeder ein Mahlgut (M₁, M₂, M₃) mit unterschiedlicher Körnung enthalten.
